# FASCICULE DE BREVET EUROPEEN

(11) **EP 3 543 894 B1**
(45) Date de publication et mention de la délivrance du brevet: **20.11.2024**
(21) Numéro de dépôt: 19164523.3
(22) Date de dépôt: 22.03.2019
(51) Int. Cl.: G06K 7/00

(54) **SOCLE D'ACCUEIL D'UN TERMINAL MOBILE ET TERMINAL MOBILE CORRESPONDANT**
AUFNAHMESTÄNDER FÜR MOBILES ENDGERÄT, UND ENTSPRECHENDES MOBILES ENDGERÄT
MOBILE TERMINAL DOCKING STATION AND CORRESPONDING MOBILE TERMINAL

(30) Priorité: 23.03.2018 FR 1852516
(43) Date de publication de la demande: 25.09.2019
(73) Titulaire: Banks and Acquirers International Holding, 75015 Paris (FR)
(72) Inventeur: SOLEILHAVOUP, Olivier, 69007 LYON (FR); GRANDDIDIER, Yann, 07610 LEMPS (FR); SOUBIRANE, Alain, 26500 BOURG-LES-VALENCE (FR); GOULON, Maxime, 26300 CHATUZANGE-LE-GOUBET (FR); ANDRE, Jérôme, 26800 MONTOISON (FR)
(74) Mandataire: Germain Maureau

(56) Documents cités:
- EP-A2- 0 940 783
- WO-A1-01/37229
- FR-A1- 2 739 709

## Description

### 1. Domaine technique

La présente invention concerne un système comprenant un terminal mobile et un socle d'accueil de ce terminal. Plus particulièrement, l'invention vise notamment à assurer l'intégrité des signaux du terminal lorsque celui-ci est déconnecté de son socle, ainsi que la bonne connexion électrique entre le terminal et le socle.

La présente invention s'applique plus particulièrement à un terminal de paiement électronique mobile, noté terminal de paiement, et un socle d'accueil de ce terminal de paiement, appelé également base de chargement ou d'alimentation.

L'invention s'applique toutefois plus généralement à tout système comprenant un terminal mobile et un socle d'accueil correspondant.

### 2. Art Antérieur

Il est connu, et rappelé ici de façon simplifiée, qu'un terminal de paiement électronique mobile comprend un boîtier contenant, à l'intérieur de celui-ci, au moins une carte électronique reliée à divers composants périphériques assurant le fonctionnement du terminal. En général, une telle carte électronique est reliée à un clavier de saisie, un écran d'affichage, un lecteur de carte à puce ou magnétique .... Habituellement, la carte électronique est située au moins en partie sous le clavier de saisie. D'autres composants périphériques, tels qu'une imprimante, un module de communication sans fil, etc., peuvent également être prévus.

En outre, l'alimentation électrique du terminal est assurée par une ou plusieurs batteries d'alimentation disposées à l'intérieur du boîtier.

Un tel terminal de paiement électronique mobile est habituellement fourni avec un socle d'accueil pouvant être relié à un ordinateur par le biais d'une liaison filaire, par exemple selon la norme USB, pour "Universal Serial Bus" en terminologie anglo-saxonne, ou RS232. Un tel socle permet notamment de fournir de l'énergie électrique au terminal, par exemple pour recharger ses batteries d'alimentation. Un tel socle permet également d'échanger des informations avec le terminal, par le biais de contacts présents sur le terminal et configurés pour coopérer avec des contacts complémentaires, dits contacts de réception, présents sur le socle. Ainsi, lorsque le terminal de paiement est correctement positionné sur son socle, les contacts du terminal de paiement viennent s'appuyer contre les contacts de réception du socle de manière à établir une liaison électrique entre le socle et le terminal de paiement.

Les terminaux de paiement électronique existants présentent en général quatre contacts destinés à coopérer avec les contacts de réception du socle, dont deux sont utilisés pour recharger la ou les batteries du terminal de paiement électronique mobile et deux pour échanger des données avec le terminal de paiement électronique. Pour permettre cet échange de données, le socle comprend par exemple un ou plusieurs processeurs et peut donc traiter les données reçues du terminal de paiement électronique, ou simplement les transmettre à l'ordinateur qui lui est relié, via les connexions de communication présentes sur le socle lui-même.

Le document FR2739709 décrit un exemple de terminal de paiement électronique mobile et de socle d'accueil de celui-ci. Les documents EP0940783 et WO0137229 décrivent des exemples de terminaux de paiement électronique mobiles comprenant respectivement un dispositif de communication mobile, tel un téléphone.

Toutefois, certaines normes relatives aux terminaux de paiement électronique et à leurs socles d'accueil requièrent que le socle d'accueil ne comprenne pas « d'intelligence », donc pas de processeur par exemple, et ne soit utilisé que pour alimenter le terminal de paiement électronique et permettre les communications entre le terminal de paiement électronique et l'ordinateur relié au socle, sans traitement des données par le socle.

Il existe donc un besoin de fournir une technique qui permet de s'affranchir de la mise en oeuvre d'intelligence dans le socle d'accueil de manière à respecter les normes relatives à cet aspect.

Il existe également un besoin pour une telle solution pouvant être fabriquée aisément et à moindre coût.

Il existe en outre un besoin pour une telle technique qui soit peu encombrante et permette une intégration simplifiée notamment dans des systèmes où les terminaux mobiles présentent des contraintes de taille (par exemple des terminaux mobiles de faibles dimensions).

### 3. Résumé de l'invention

La technique proposée se rapporte à un terminal de paiement électronique mobile présentant un boitier comprenant une face avant, une face arrière et des bords reliant les faces avant et arrière, la face arrière ou un bord présentant une pluralité de contacts destinés à coopérer avec une pluralité de contacts de réception sur un socle d'accueil, les contacts du terminal de paiement électronique mobile étant connectés par le biais d'une pluralité de fils de connexion à au moins une carte électronique du terminal mobile.

Selon l'invention, la pluralité de contacts est disposée à proximité de la carte électronique de sorte à limiter la longueur des fils de connexion.

Ainsi, le rapprochement des contacts électriques de la ou des cartes électroniques permet de réduire la longueur des fils électriques reliant les contacts du terminal de paiement électronique mobile avec la ou des cartes électroniques. Un tel agencement permet de minimiser l'amplitude des interférences, voire de s'affranchir de l'apparition de celles-ci, de manière à garantir l'intégrité des signaux électriques du terminal de paiement électronique mobile lorsque celui-ci est déconnecté d'un socle d'accueil et que les fils de connexion se retrouvent « en l'air »

La pluralité de contacts est disposée sur une partie inférieure de la face arrière du terminal de paiement électronique mobile.

Selon ce mode de réalisation, lorsque, classiquement, une ou des cartes électroniques du terminal sont disposées sensiblement sous le clavier, c'est-à-dire en partie inférieure du terminal, la disposition des contacts sur cette partie inférieure du terminal mobile est particulièrement avantageuse pour limiter la longueur des fils de connexion entre cette ou ces cartes électroniques et les contacts du terminal de paiement électronique mobile.

Le terminal de paiement électronique mobile comprend des premiers moyens de verrouillage destinés à coopérer avec des seconds moyens de verrouillage d'un socle d'accueil, les premiers moyens de verrouillage étant ménagés sur l'un des bords du terminal de paiement électronique mobile.

Selon ce mode de réalisation, les moyens de verrouillage permettent d'améliorer le couplage entre le terminal de paiement électronique mobile et un socle d'accueil de manière à éviter toute déconnexion accidentelle entre eux. Les moyens de verrouillage permettent donc de maintenir la liaison électrique entre les contacts du terminal de paiement électronique mobile et ceux d'un socle d'accueil, en exerçant un effort de compression du terminal de paiement électronique mobile sur le socle d'accueil.

Ceci est particulièrement avantageux lorsque les contacts du terminal de paiement électronique mobile sont situés sur la partie inférieure du terminal. En effet, lorsque le terminal de paiement électronique mobile est monté sur un socle d'accueil, la face arrière du terminal repose sur ce socle d'accueil de sorte à ce que les contacts du terminal viennent faire face aux contacts de réception du socle d'accueil. Par ailleurs, le poids du terminal permet classiquement d'exercer un effort suffisant pour assurer la liaison électrique entre les contacts du terminal et des contacts de réception du socle d'accueil. En revanche, le poids du terminal n'est pas également réparti sur le terminal mobile et il s'avère que la partie supérieure (écran, module d'impression ...) est plus lourde que la partie inférieure (clavier). Dans le cas où les contacts de connexion sont situés sur cette partie inférieure du terminal, il arrive que la connexion entre ces contacts et ceux du socle d'accueil ne soit pas toujours effective, du fait de ce déséquilibre du poids du terminal vers la partie supérieure. Les moyens de verrouillage permettent de remédier à ce problème.

Selon un mode de réalisation particulier, le terminal de paiement électronique mobile comprend des premiers moyens de guidage destinés à coopérer avec des seconds moyens de guidage d'un socle d'accueil, les premiers moyens de guidage s'étendant parmi la pluralité de contacts de sorte à séparer la pluralité de contacts en au moins deux groupes de contacts.

Selon ce mode de réalisation, les moyens de guidage assurent le bon positionnement du terminal de paiement électronique mobile lorsque celui-ci est positionné sur un socle d'accueil de manière à réaliser une connexion électrique entre le terminal et un socle d'accueil. Plus précisément, de tels moyens de guidage permettent d'assurer le bon alignement des contacts du terminal de paiement électronique mobile avec ceux d'un socle d'accueil, grâce à une coopération avec des moyens de guidage complémentaires sur le socle d'accueil. Par ailleurs, un tel agencement des moyens de guidage, à savoir disposés parmi les contacts, par exemple au milieu de la pluralité de contacts, permet d'assurer une connexion simultanée des contacts de terminal avec ceux du socle d'accueil.

Selon un mode de réalisation particulier, le terminal de paiement électronique mobile comprend seize contacts.

Selon ce mode de réalisation, dans le cas particulier où le socle d'accueil du terminal de paiement électronique mobile ne « contient pas d'intelligence », il est nécessaire de prévoir un nombre de contacts permettant de faire transiter toutes les données utiles au fonctionnement du terminal de paiement électronique mobile, le socle n'assurant plus de rôle de traitement de ces données.

Ainsi, lorsque le nombre de contacts est suffisant, le terminal mobile peut donc recevoir/transmettre, par le bais de ces contacts électriques, les données (non traitées par le socle) nécessaires pour pouvoir réaliser les opérations initialement réalisées dans un socle d'accueil de terminal de paiement électronique mobile. Par exemple, la gestion du rechargement électrique du terminal de paiement électronique mobile, la sélection d'un port de communication particulier, etc. sont réalisées par le terminal de paiement électronique mobile et plus par un socle d'accueil.

Ici, ce mode de réalisation prévoit seize contacts pour assurer le bon fonctionnement du terminal de paiement électronique mobile, par exemple en Turquie où les contraintes de sécurité sont telles qu'un socle d'accueil ne doit pas contenir d'intelligence .

La technique proposée se rapporte en outre à un socle d'accueil comprenant une pluralité de contacts de réception destinés à coopérer avec une pluralité de contacts d'un terminal de paiement électronique mobile, par exemple tel que décrit précédemment, selon les différents modes de réalisation.

Selon l'invention, le socle d'accueil comprend des seconds moyens de verrouillage destinés à coopérer avec des premiers moyens de verrouillage d'un terminal de paiement électronique mobile.

Ainsi, les moyens de verrouillage permettent d'améliorer le couplage entre le socle d'accueil et un terminal de paiement électronique mobile de manière à éviter toute déconnexion accidentelle entre eux. Les moyens de verrouillage permettent donc de maintenir la liaison électrique entre les contacts du socle d'accueil et ceux d'un terminal de paiement électronique mobile, en exerçant un effort de compression du terminal sur le socle d'accueil.

Selon un mode de réalisation particulier, le socle d'accueil comprend des seconds moyens de guidage destinés à coopérer avec des premiers moyens de guidage du terminal de paiement électronique mobile, les seconds moyens de guidage s'étendant parmi la pluralité de contacts de réception de sorte à séparer la pluralité de contacts en au moins deux groupes de contacts.

Selon ce mode de réalisation, les moyens de guidage assurent le bon positionnement d'un terminal de paiement électronique mobile lorsque celui-ci est positionné sur le socle d'accueil de manière à réaliser une connexion électrique entre un terminal et le socle d'accueil. Plus précisément, de tels moyens de guidage permettent d'assurer le bon alignement des contacts du socle d'accueil avec ceux d'un terminal de paiement électronique mobile. Par ailleurs, un tel agencement des moyens de guidage, à savoir disposés parmi les contacts, par exemple au milieu de ces contacts, permet d'assurer une connexion simultanée des contacts du socle d'accueil avec ceux d'un terminal.

Selon un mode de réalisation particulier, le socle d'accueil comprend seize contacts de réception.

Selon ce mode de réalisation, lorsque le socle d'accueil ne « contient pas d'intelligence », le nombre de contacts prévus permet de transférer, vers un terminal de paiement électronique mobile, les données non traitées nécessaires pour que le terminal de paiement électronique mobile puisse réaliser les opérations initialement réalisées par le socle d'accueil. Par exemple, la gestion du rechargement électrique du terminal, la sélection d'un port de communication particulier, etc. sont réalisées par le terminal de paiement électronique mobile et plus par le socle d'accueil.

Ainsi, l'invention se rapporte à un système comprenant un terminal de paiement électronique mobile selon un quelconque mode de réalisation précédemment décrit et un socle d'accueil du terminal de paiement électronique mobile selon un quelconque mode de réalisation précédemment décrit.

Ainsi, ce système permet de répondre à toutes les problématiques posées lorsque l'on cherche :
- à améliorer le fonctionnement d'un terminal de paiement électronique d'un point de vue interférences entre signaux, en limitant la longueur des fils de connexions entre le ou les cartes électroniques du terminal de paiement électronique et les contacts destinés à assurer une liaison électrique avec le socle d'accueil, par déport des contacts de la partie supérieure à la partie inférieure du terminal de paiement électronique ;
- à améliorer la connexion entre les contacts du terminal de paiement électronique et ceux du socle lorsque les contacts sont déportés d'un côté où le terminal de paiement électronique est le plus léger, par un système de verrouillage du terminal de paiement électronique sur le socle ;
- à améliorer le guidage du terminal de paiement électronique sur le socle, par des moyens de guidage situés parmi les contacts, de préférence au milieu des contacts, préférentiellement lorsque ceux-ci sont nombreux ; et
- à pallier l'absence « d'intelligence » dans un socle d'accueil, en augmentant le nombre de contacts nécessaires (soit seize par exemple).

### 4. Dessins

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre un exemple de terminal de paiement électronique mobile selon un mode de réalisation de l'invention ;
- la figure 2 détaille un exemple d'agencement des contacts électrique du terminal de paiement électronique mobile de la figure 1 ;
- la figure 3 illustre un exemple de socle d'accueil du terminal de paiement électronique mobile de la figure 1 ;
- la figure 4 détaille l'agencement des contacts de réception du socle d'accueil de la figure 3 ;
- la figure 5 illustre un système comprenant le terminal de paiement électronique mobile de la figure 1 positionné sur le socle d'accueil de la figure 3 ; et
- la figure 6 est une coupe longitudinale et focalisée sur la partie inférieure du système de la figure 5.

### 5. Description

Par souci de clarté, de mêmes éléments ont été désignés par de mêmes références sur les différentes figures.

Par ailleurs, on utilise dans la présente description les termes d'orientation et de positionnement "inférieur", "supérieur", "avant", "arrière" en se référant arbitrairement à une position normale d'utilisation d'un terminal de paiement électronique mobile, dans laquelle le clavier et l'écran du terminal sont disposés sur la face avant, définissant un plan approximativement parallèle au sol (horizontal) et dont le clavier, disposé au moins sur la portion inférieure du terminal, est orienté vers l'utilisateur. On utilise en outre les termes "transversal" et "longitudinal", en se référant à des directions respectivement approximativement orthogonales aux faces latérales du terminal, et approximativement orthogonales aux faces avant et arrière du terminal.

### 5.1. Principe général

Les inventeurs de la présente demande ont été confrontés à la nécessité d'adapter un terminal de paiement électronique mobile à un socle d'accueil ne devant pas « contenir d'intelligence », pour des raisons de sécurité liées à des normes spécifiques (par exemple comme c'est le cas en Turquie).

Ainsi, afin de satisfaire aux normes qui requièrent l'absence d'intelligence dans un socle d'accueil, il convient d'intégrer, dans le terminal de paiement, les composants dits "intelligents" classiquement présents dans le socle d'accueil. Une telle adaptation du terminal induit également une augmentation du nombre de contacts électriques entre le socle et le terminal de paiement électronique de sorte à permettre au terminal de paiement de réaliser les opérations initialement réalisées par un socle d'accueil pourvu d'intelligence.

Toutefois, une telle augmentation du nombre de contacts électriques engendre elle-même des inconvénients que les inventeurs de la présente demande ont cherché à résoudre.

Plus précisément, lorsque que le terminal de paiement est déconnecté de son socle d'accueil, il a été constaté des dysfonctionnements du terminal de paiement, à savoir des perturbations sur les signaux électriques de celui-ci.

Il a été remarqué que des telles perturbations étaient dues à des interférences provenant des fils électriques qui relient les contacts du terminal (destinés à coopérer avec des contacts de réception complémentaires d'un socle d'accueil) à la ou aux cartes électroniques de ce même terminal.

Plus précisément, lorsque le terminal de paiement est déconnecté de son socle d'accueil, de tels fils électriques se retrouvent « en l'air » et se comportent comme des antennes qui réceptionnent des ondes superflues et génèrent des signaux parasites qui perturbent le fonctionnement du terminal de paiement.

L'apparition et la présence de telles interférences sont des phénomènes connus dans le domaine des terminaux de paiement. Toutefois, ces phénomènes ne perturbent de manière problématique le fonctionnement d'un terminal de paiement que lorsque celui-ci comprend un nombre élevé de contacts électriques et donc de fils « en l'air » lorsque le terminal de paiement électronique n'est pas sur son socle.

Le principe général de la présente invention consiste donc à disposer la pluralité de contacts du terminal, qui est destinée à coopérer avec une pluralité de contacts de réception d'un socle d'accueil, à proximité de la ou des cartes électroniques de ce même terminal, de manière à réduire la longueur des fils de connexion et ainsi réduire, voire annuler, les interférences engendrées par ces fils lorsqu'ils se retrouvent « en l'air ».

Un tel agencement permet donc de garantir l'intégrité des signaux électriques du terminal de paiement lorsque celui-ci est déconnecté d'un socle d'accueil.

### 5.2. Description d'un mode de réalisation

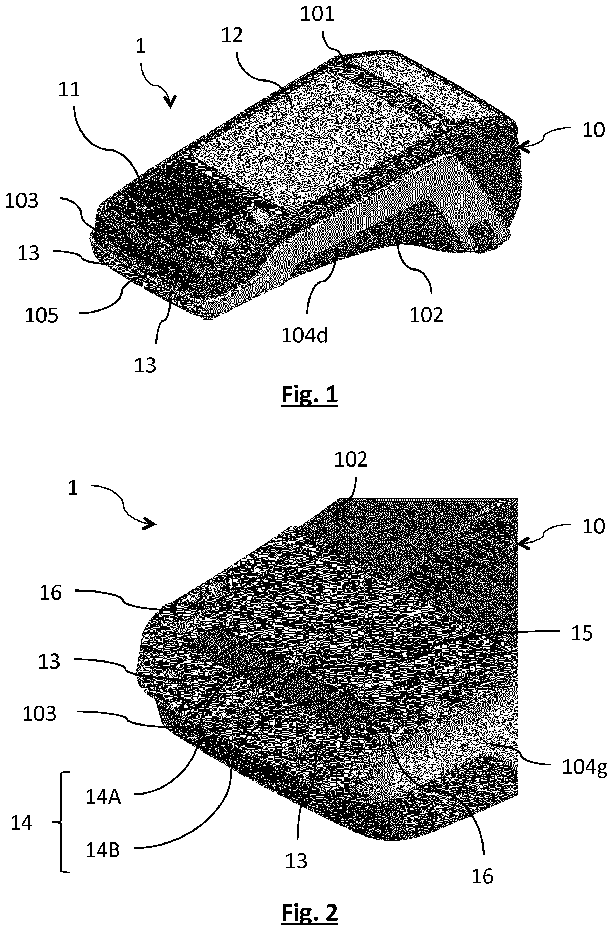

La **figure 1** illustre un terminal de paiement électronique mobile dans lequel les contacts électriques, qui sont destinés à coopérer avec des contacts de réception d'un socle d'accueil, sont disposés à proximité de la ou des cartes électroniques de ce même terminal, conformément à un mode de réalisation de la technique proposée.

Le terminal de paiement 1 comprend un boîtier 10 présentant une face avant 101, une face arrière 102 opposée à la face avant 101 et des bords reliant les faces avant 101 et arrière 102 de sorte à former le boitier complet du terminal 1.

Le boitier complet du terminal 1 comprend un bord inférieur 103, deux bords latéraux 104d et 104g opposés (seul le bord latéral droit 104d est visible) s'étendant transversalement au bord inférieur 103 et un bord supérieur (non visible) à l'opposé du bord inférieur 103.

Par ailleurs, classiquement, le terminal de paiement 1 comprend un clavier 11, disposé sensiblement en partie inférieure de la face avant 101, un écran 12 d'affichage, disposé sensiblement en partie supérieure de la face avant 101, une fente d'insertion 105 d'une carte à puce de paiement, ménagée dans le bord inférieur 103. Un des bords latéraux 104d présente par exemple un lecteur de carte magnétique.

Le terminal de paiement 1 comprend en outre au moins une carte électronique (non représentée sur la figure 1), disposée à l'intérieur du boîtier 10, reliée au clavier 11, à l'écran 12, aux lecteurs de carte à puce et magnétique, ainsi qu'à divers autres composants périphériques assurant le fonctionnement du terminal 1.

Dans l'exemple de terminal de paiement illustré, la ou les cartes électroniques sont disposées au moins en partie sous le clavier 11, c'est-à-dire à proximité de la fente d'insertion 105 de carte à puce ménagée sur le bord inférieur 103 du boîtier 10.

Le positionnement des contacts du terminal de paiement électronique 1, destinés à coopérer avec des contacts de réception complémentaires sur un socle d'accueil, est décrit plus en détail ci-après, en relation avec la figure 2.

En effet, la **figure 2** représente une vue de dessous de la partie inférieure du terminal de paiement 1, permettant notamment d'illustrer la configuration des contacts électriques 14 du terminal de paiement électronique 1.

Comme déjà indiqué, la ou les cartes électroniques (non représentées) étant disposées sensiblement, au moins en partie, sous le clavier 11, les contacts électriques 14 du terminal de paiement 1 sont également disposés sensiblement sous le clavier 11, de façon à se situer à proximité de la ou des cartes électroniques.

Une telle configuration permet en effet de réduire la longueur des fils électriques (non représentés), reliant les contacts électriques 14 et la ou des cartes électronique, de sorte à minimiser l'amplitude des interférences, voire de s'affranchir de l'apparition de celles-ci, contrairement aux terminaux de paiement électronique de l'art antérieur dont les contacts sont situés sur la partie supérieure de la face arrière, à proximité du module d'impression par exemple.

Tel qu'illustré, et selon ce mode de réalisation particulier, le terminal de paiement 1 comprend seize contacts électriques 14 de sorte à ce que celui-ci puisse assurer les différentes opérations normalement réalisées par un socle d'accueil pourvu d'intelligence. Cependant, un nombre différent de contacts peut être envisagé selon les exigences d'architecture du terminal de paiement électronique ou du socle d'accueil, les exigences des normes régissant les terminaux de paiement électronique...

Les seize contacts électriques 14 du terminal 1 sont donc disposés sur la face arrière 102 du boîtier 10, dans un logement prévu à cet effet, de manière à entrer en connexion avec les contacts de réception complémentaires d'un socle d'accueil sur lequel le terminal est posé, par exemple pour recharger le terminal de paiement électronique, ou encore le relier à un serveur de transaction ....

Plus précisément, la ou les cartes électroniques (non représentées) étant disposées à proximité de l'extrémité inférieure du terminal 1, les contacts électriques 14 sont disposés à proximité de l'extrémité inférieure de la face arrière 102.

Par ailleurs, les contacts électriques 14 sont montés affleurant à la surface de la face arrière 102, de sorte à ce qu'ils ne dépassent pas de celle-ci. Ainsi, la prise en main du terminal de paiement 1, par un utilisateur, n'est pas altérée.

En revanche, cette configuration des contacts situés sur la partie inférieure du terminal de paiement électronique 1 présente l'inconvénient de ne pas tirer partie de la répartition particulière du poids d'un terminal de paiement électronique. En effet, la répartition des éléments de fonctionnement d'un terminal de paiement électronique tels que le clavier, l'écran, le module d'impression, le lecteur de carte ... entraîne un poids plus important de la partie supérieure du terminal de paiement électronique (au niveau du module d'impression) par rapport à la partie inférieure (au niveau du clavier). Lorsque, classiquement, les contacts sont situés au niveau de la partie la plus lourde du terminal de paiement électronique, le poids du terminal de paiement électronique suffit à assurer et maintenir les connexions entre les contacts du terminal de paiement électronique et les contacts de réception complémentaires sur le socle d'accueil. A contrario, lorsque les contacts 14 sont situés sur la partie inférieure du terminal de paiement électronique 1 comme dans la technique proposée, le poids supérieur de la partie supérieure du terminal de paiement électronique peut empêcher une bonne connexion entre les contacts du terminal de paiement électronique et les contacts de réception complémentaires sur le socle d'accueil.

Ainsi, la présente technique propose de remédier à cet inconvénient en prévoyant des premiers moyens de verrouillage 13 sur le terminal de paiement électronique 1, destinés à coopérer avec des seconds moyens de verrouillage complémentaires ménagés sur un socle d'accueil, ces moyens de verrouillage étant configurés pour empêcher tout déplacement du terminal de paiement 1 lorsque celui-ci est correctement positionné sur le socle d'accueil.

Tel qu'illustré en figures 1 et 2, les premiers moyens de verrouillage sont formés par deux renfoncements 13 ménagés dans le bord inférieur 103 du terminal de paiement 1, alignés horizontalement et disposés à proximité de chaque extrémité longitudinale du bord inférieur 103.

Les renfoncements 13, formant les premiers moyens de verrouillage, s'étendent sensiblement en direction du bord supérieur, c'est-à-dire transversalement au bord inférieur 103. Comme décrit plus en détail ci-après, ces renfoncements 13 sont destinés à coopérer avec des seconds moyens de verrouillage formés par deux ergots 23 faisant saillie depuis le bord inférieur 203 du socle d'accueil. Ainsi, lorsque l'utilisateur pose le terminal de paiement électronique mobile sur son socle d'accueil, il enclenche le verrouillage du terminal de paiement électronique en l'orientant de sorte à faire coopérer les moyens de verrouillage respectifs du terminal de paiement électronique et du socle, puis achève de poser le terminal de paiement électronique sur le socle et la connexion électrique est alors opérante.

Toute autre forme des premiers et seconds moyens de verrouillage peut être envisagée, de sorte à répondre à la problématique de verrouillage du terminal de paiement électronique sur le socle d'accueil.

Il est à noter que le verrouillage est bien sûr réversible, de sorte à pouvoir aisément retirer le terminal de paiement électronique de son socle, pour l'utilisation prévue en mobilité. Ainsi, lorsque l'utilisateur a besoin de retirer le terminal de paiement électronique de son socle, il déverrouille le terminal de paiement électronique en désengageant les moyens de verrouillage respectifs du terminal de paiement électronique et du socle pour libérer le terminal de paiement électronique.

En outre, et comme illustré en figure 2, les contacts électriques 14 sont alignés selon un axe orienté transversalement à l'axe longitudinal du terminal de paiement 1 de sorte à permettre une connexion simultanée des contacts électriques 14 avec les contacts de réception du socle lors du positionnement du terminal de paiement 1 sur le socle d'accueil.

Par ailleurs, afin de faciliter le positionnement du terminal de paiement électronique sur le socle, le terminal de paiement 1 comprend des premiers moyens de guidage 15 destinés à coopérer avec des seconds moyens de guidage complémentaires ménagés sur un socle d'accueil. De tels moyens de guidage 15 permettent donc d'assurer le bon positionnement du terminal lorsque celui-ci coulisse sur le socle d'accueil, avant d'y être posé complètement, en vue d'établir une connexion électrique entre le terminal et un socle d'accueil.

Par exemple, les premiers moyens de guidage comprennent une rainure 15 ménagée sur le milieu de l'extrémité inférieure de la face arrière 102 du boîtier 10. La rainure 15 s'étend selon l'axe longitudinal du terminal de paiement 1 et traverse le bord inférieur 103 du boîtier 10 de sorte à simplifier l'insertion du moyen de guidage complémentaire présent sur un socle d'accueil.

Selon l'exemple illustré en figure 2, la rainure 15 s'étend parmi les contacts électriques 14, de sorte à séparer l'ensemble des contacts électriques 14 en deux sous-ensembles de contacts électriques 14A, 14B. Selon le nombre de contacts 14, les deux sous-ensembles sont identiques. En d'autres termes, les contacts électriques 14 sont disposés symétriquement par rapport à la rainure, de façon à permettre un meilleur guidage du terminal de paiement électronique sur son socle d'accueil.

De plus, de tels moyens de guidage 15 disposés entre les contacts électriques permettent d'assurer une connexion simultanée de tous les contacts électriques.

Par ailleurs, les pieds 16 du terminal 1 forment des moyens de guidage supplémentaires lors du positionnement du terminal de paiement sur un socle d'accueil, lequel présente également des moyens de réception des pieds 16 du terminal.

Ainsi, la présence conjointe des moyens de guidage 15 et des pieds 16 permet de faciliter le positionnement du terminal de paiement électronique 1 sur le socle d'accueil et ainsi d'assurer une bonne connexion des contacts du terminal de paiement électronique avec les contacts de réception complémentaires du socle d'accueil.

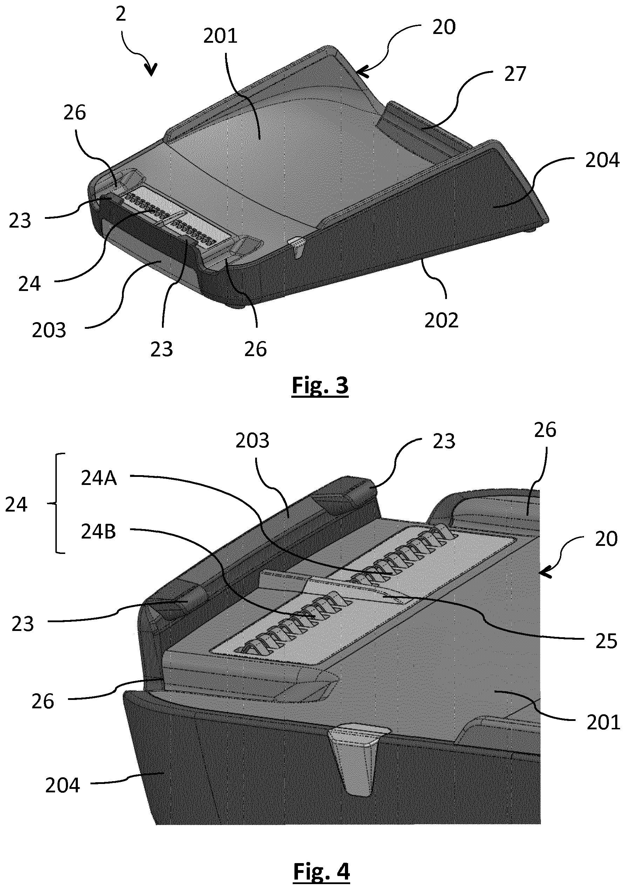

Les **figures 3 et 4** illustrent un socle d'accueil 2 pour un terminal de paiement 1 tel qu'illustré aux figures 1 et 2.

Le socle d'accueil 2 est *a priori* dépourvu d'intelligence et est donc adapté à un terminal de paiement électronique 1 tel que décrit ci-dessus, selon différents modes de réalisation de la technique proposée. Le socle d'accueil 2 comprend un boîtier 20 présentant une face avant 201 pour accueillir le terminal de paiement électronique, une face arrière 202 opposée à la face avant 201 et destinée à être posée sur un support (tel qu'un comptoir d'un commerçant par exemple) et des bords reliant les faces avant 201 et arrière 202 de sorte à former le boitier complet du socle d'accueil 2.

Le boitier complet du socle 2 comprend un bord inférieur 203, deux bords latéraux 204 opposés (seul le bord latéral droit est visible) s'étendant transversalement au bord inférieur 203 et un bord supérieur (non visible).

Le socle d'accueil 2 comprend en outre des contacts de réception 24 configurés pour communiquer avec un terminal de paiement, sans traitement préalable des données par le socle. Plus précisément, les contacts de réception 24 sont destinés à coopérer avec des contacts électriques 14 d'un terminal de paiement 1 tel que décrit ci-dessus et sont disposés sur la face avant 201 qui est adaptée pour recevoir la face arrière du terminal de paiement 1.

Le positionnement des contacts de réception 24 sur le socle d'accueil 2 est donc déterminé de manière à ce qu'ils soient en vis-à-vis des contacts électriques 14 d'un terminal de paiement 1 lorsque celui-ci est correctement positionné sur le socle. Les contacts de réception 24 sont donc positionnés en fonction du positionnement des contacts électriques 14 d'un terminal de paiement 1 qui, conformément à la technique proposée, se situent à proximité de la ou des cartes électroniques.

Tel qu'illustré, et davantage visible sur la figure 4, le socle d'accueil 2 comprend seize contacts de réception 24 disposés sur l'extrémité inférieure de la face avant 201 du boîtier 20, dans un logement prévu à cet effet.

Les contacts de réception 24 font légèrement saillie sur la face avant 201 de sorte à assurer le contact avec des contacts électriques 14 d'un terminal de paiement lorsque celui-ci est correctement positionné sur le socle d'accueil 2.

Par exemple, les contacts de réception 24 sont alignés selon un unique axe orienté transversalement à l'axe longitudinal du socle d'accueil 2 de sorte à permettre une connexion simultanée des contacts de réception 24 avec les contacts électrique 14 correspondants du terminal, lors du positionnement de celui-ci sur le socle d'accueil 2. En d'autres termes, tous les contacts sont disposés sur une unique surface.

Par ailleurs, le socle d'accueil 2 comprend des seconds moyens de verrouillage 23, destinés à coopérer avec des premiers moyens de verrouillage 13 ménagés sur le terminal de paiement 1, par exemple tels que décrit ci-dessus, et configurés pour empêcher tout déplacement du terminal de paiement lorsque celui-ci est correctement positionné sur le socle d'accueil 2.

Les seconds moyens de verrouillage sont par exemple formés par deux ergots 23 faisant saillie depuis le bord inférieur 203 et de manière sensiblement parallèle à la face avant 201. Les ergots 23 sont alignés horizontalement et sont disposés à proximité de chaque extrémité longitudinale du bord inférieur 203.

De plus, comme illustré en figure 3, l'extrémité supérieure de la face avant 201 du socle d'accueil 2 comprend en outre un élément de blocage 27, destiné à coopérer avec un élément de blocage complémentaire ménagé sur un terminal de paiement, permettant d'éviter le glissement du terminal lorsque le socle présente une face avant 201 inclinée.

Le socle d'accueil 2 présente également des seconds moyens de guidage 25, destinés à coopérer avec des premiers moyens de guidage 15 ménagés sur un terminal de paiement 1, par exemple tels que décrit ci-dessus. Par exemple, selon un mode de réalisation, les moyens de guidage comprennent une saillie 25 complémentaire avec la rainure 15 du terminal de paiement électronique 1. La saillie 25 est ainsi ménagée sur le milieu de l'extrémité inférieure de la face avant 201 du boîtier 20 et est orientée transversalement à la face avant 201. En outre, la saillie 25 s'étend selon l'axe longitudinal du socle d'accueil 2 et rejoint le bord inférieur 203 du boîtier 20.

Par ailleurs, la saillie 25 s'étend parmi les contacts de réception 24 de sorte à séparer l'ensemble des contacts de réception 24 en deux sous-ensembles de contacts de réception 24A, 24B. Selon le nombre de contacts de réception 24, les deux sous-ensembles sont identiques.

Le socle d'accueil 2 comprend en outre deux cavités 26 ménagées à l'extrémité inférieure de la face avant 201 et orientées selon l'axe longitudinal du socle. Les cavités 26 sont configurées pour recevoir des pieds 16 d'un terminal de paiement 1, par exemple tels que décrit ci-dessus, lorsque celui-ci est positionné sur le socle d'accueil 2.

D'une manière générale, le socle d'accueil 2 est donc adapté à recevoir un terminal de paiement électronique 1 tel que décrit ci-dessus selon les différents modes de réalisation de la technique proposée et comprend des contacts de réception 24, des moyens de verrouillage 23 et des moyens de guidage 25 disposés de manière similaire et configurés de manière complémentaire respectivement aux contacts électriques 14, aux moyens de verrouillage 13 et aux moyens de guidage 15 d'un terminal de paiement tel qu'illustré sur la figure 1.

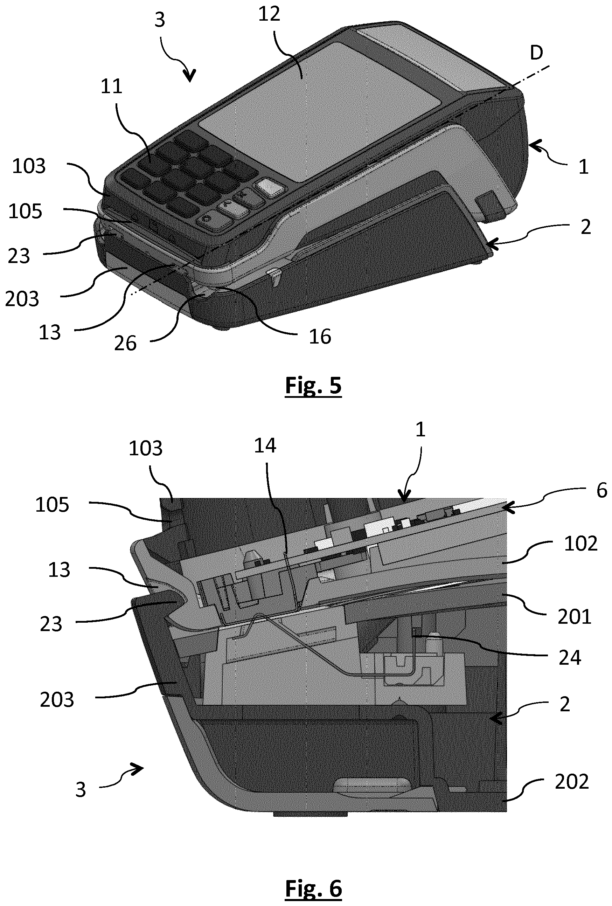

Les **figures 5 et 6** illustrent un système 3 comprenant un terminal de paiement 1, tel que représenté aux figures 1 et 2, positionné sur un socle d'accueil 2, tel que représenté aux figures 3 et 4.

Lorsque le terminal de paiement 1 est correctement positionné sur le socle d'accueil 2, tel que représenté sur la figure 5, la face arrière 102 du terminal 1 repose sur la face avant 201 du socle 2 et les moyens de verrouillage 13, 23 sont accouplés. Dans une telle configuration, la liaison électrique, réalisée par les contacts respectifs 14 du terminal de paiement électronique et 24 du socle, est correctement établie jusqu'à déconnexion volontaire du terminal par l'utilisateur.

Les moyens de verrouillage 13, 23 sont en outre situés en dessous de la fente 105 d'insertion, qui reste donc accessible. Ainsi, le terminal reste fonctionnel même lorsqu'il est monté sur un socle d'accueil 2.

La figure 6 est une vue en coupe longitudinale, selon l'axe D, du système 3 de la figure 5 mettant en évidence la partie inférieure du système 3.

Les premiers moyens de verrouillage 13 du terminal de paiement électronique 1 présentent respectivement une surface biseautée configurée pour venir en contact avec une surface biseautée complémentaire présente sur les seconds moyens de verrouillage 23 du socle d'accueil 2.

Ainsi, en fin de positionnement du terminal 1 sur le socle 2, réalisé par le biais des moyens de guidage respectifs 15, 25, la configuration particulière des moyens de verrouillage permet d'améliorer la pression du terminal 1 sur le socle 2 et donc, de garantir la liaison électrique entre les contacts électriques 14 du terminal de paiement électronique 1 et les contacts de réception 24 du socle d'accueil 2.

En outre, l'orientation particulière des moyens de verrouillage 13, 23 permet d'éviter le basculement du terminal 1 lorsque le poids de celui-ci est plus important dans sa partie supérieure, par la présence d'un module d'impression notamment.

Par ailleurs, les contacts de réception 24 du socle d'accueil 2 sont, classiquement, des lames métalliques souples présentant une faible élasticité. Ainsi, lors du positionnement du terminal sur le socle, l'effort de compression exercé par le terminal ne dégrade pas les contacts de réception 24.

La figure 6 illustre également l'emplacement d'une carte électronique 6 du terminal de paiement électronique 1, reliée par des fils électriques courts aux contacts 14, permettant de résoudre le problème d'interférences dues à des fils trop longs selon l'art antérieur, comme déjà décrit précédemment.

### 5.3. Autres caractéristiques et modes de réalisation

Dans le mode de réalisation décrit, les contacts électriques du terminal sont disposés sur la face arrière du terminal. Toutefois, dans un autre mode de réalisation particulier, les contacts électriques peuvent être disposés sur le pourtour du terminal. Par exemple, les contacts électriques peuvent être disposés sur le bord inférieur ou à proximité de l'extrémité inférieure de l'un des bords latéraux.

Dans le mode de réalisation décrit, étant donné que la ou les cartes électroniques sont disposées sensiblement sous le clavier, les contacts électriques sont disposés à proximité du bord inférieur du terminal. Toutefois, dans un exemple particulier non couvert par les revendications, la ou les cartes électroniques peuvent être disposées sensiblement sous l'écran et les contacts électriques sont disposés sensiblement au centre du terminal de sorte à minimiser la longueur des fils électriques.

Dans le mode de réalisation décrit, le terminal de paiement et le socle d'accueil comprennent seize contacts respectivement. Toutefois, dans un autre mode de réalisation particulier, le nombre de contacts électriques peut être supérieur ou inférieur selon le nombre et la nature des composants dits "intelligents" devant être introduits à l'intérieur du terminal de paiement. D'une manière générale, un socle dépourvu d'intelligence présente un nombre de contact supérieur à quatre.

Dans le mode de réalisation décrit, la technique proposée est illustrée en relation avec un socle d'accueil dépourvu d'intelligence. Toutefois, dans un autre mode de réalisation particulier, la technique proposée peut être mise en oeuvre dans un socle comprenant une quelconque forme d'intelligence.

Dans un autre mode de réalisation particulier, la technique proposée peut être mise en oeuvre dans tout type de terminal de paiement mobile, et plus généralement dans tout type de terminal mobile devant communiquer avec un socle d'accueil, de manière à minimiser l'amplitude des interférences, voire à s'affranchir de l'apparition de celles-ci, en vue de garantir l'intégrité des signaux électriques du terminal lorsque celui-ci est déconnecté d'un socle d'accueil.

Bien évidemment, la technique proposée n'est pas limitée aux modes de réalisation décrits précédemment et fournis uniquement à titre d'exemple. Elle englobe diverses modifications, formes alternatives et autres variantes que pourra envisager l'homme du métier dans le cadre de la problématique posée et notamment toutes combinaisons des différents modes de fonctionnement décrits précédemment, pouvant être pris séparément ou en association.

## Revendications

1. Système (3) comprenant :
- un terminal de paiement électronique mobile (1) présentant un boitier (10) comprenant une face avant (101), une face arrière (102) et des bords (103, 104d, 104g) reliant lesdites faces avant (101) et arrière (102), ladite face arrière (102) ou un bord (103, 104d, 104g) présentant une pluralité de contacts (14) destinés à coopérer avec une pluralité de contacts de réception (24) sur un socle d'accueil et de rechargement (2), lesdits contacts (14) dudit terminal de paiement électronique mobile (1) étant connectés par le biais d'une pluralité de fils de connexion à au moins une carte électronique dudit terminal mobile (1), et comprenant des premiers moyens de verrouillage (13) ;
- le socle d'accueil et de rechargement (2) comprenant ladite pluralité de contacts de réception (24), et des seconds moyens de verrouillage (23) destinés à coopérer avec les premiers moyens de verrouillage (13) du terminal de paiement électronique mobile (1) ;
ledit système (3) étant **caractérisé en ce que** lesdits premiers moyens de verrouillage (13) sont ménagés sur l'un desdits bords (103, 104d, 104g) dudit terminal de paiement électronique mobile (1), et ladite pluralité de contacts (14) du terminal de paiement électronique mobile (1) est disposée sur une partie inférieure de ladite face arrière (102) dudit terminal de paiement électronique mobile (1) à proximité de ladite carte électronique, de sorte à limiter la longueur desdits fils de connexion.

2. Système (3) selon la revendication 1, **caractérisé en ce que** le terminal de paiement électronique mobile (1) comprend des premiers moyens de guidage (15) destinés à coopérer avec des seconds moyens de guidage (25) du socle d'accueil (2), lesdits premiers moyens de guidage (15) s'étendant parmi ladite pluralité de contacts (14) de sorte à séparer ladite pluralité de contacts (14) en au moins deux groupes de contacts (14A, 14B).

3. Système (3) selon la revendication 2, **caractérisé en ce que** lesdits seconds moyens de guidage (25) s'étendent parmi ladite pluralité de contacts de réception (24) de sorte à séparer ladite pluralité de contacts (24) en au moins deux groupes de contacts (24A, 24B).

4. Système (3) selon l'une quelconque des revendications 1 à 3, **caractérisé en ce que** le terminal de paiement électronique mobile (1) comprend seize contacts (14).

5. Système (3) selon l'une quelconque des revendications 1 à 4, **caractérisé en ce que** le socle (2) comprend seize contacts de réception (24).

## Patentansprüche

1. System (3), umfassend:
- ein mobiles elektronisches Zahlungsterminal (1) mit einem Gehäuse (10), das eine Vorderseite (101), eine Rückseite (102) und Kanten (103, 104d, 104g) umfasst, die die Vorderseite (101) und die Rückseite (102) verbinden, wobei die Rückseite (102) oder ein Rand (103, 104d, 104g) eine Vielzahl von Kontakten (14) aufweist, die dazu bestimmt sind, mit einer Vielzahl von Aufnahmekontakten (24) auf einer Aufnahme- und Ladestation (2) zusammenzuwirken, wobei die Kontakte (14) des mobilen elektronischen Zahlungsterminals (1) über eine Vielzahl von Verbindungsmitteln mit mindestens einer elektronischen Karte des mobilen Terminals (1) verbunden sind, und erste Verriegelungsmittel (13) umfassen;
- die Aufnahme- und Ladestation (2) die Vielzahl von Aufnahmekontakten (24) umfasst, und zweite Verriegelungsmittel (23), um mit den ersten Verriegelungsmitteln (13) des mobilen elektronischen Zahlungsterminals (1) zusammenzuwirken;
wobei das System (3) **dadurch gekennzeichnet ist, dass** die ersten Verriegelungsmittel (13) an einer der Kanten (103, 104d, 104g) des mobilen elektronischen Zahlungsterminals (1) vorgesehen sind und die Vielzahl von Kontakten (14) des mobilen elektronischen Zahlungsterminals (1) an einem unteren Teil der Rückseite (102) des mobilen elektronischen Zahlungsterminals (1) in der Nähe der elektronischen Karte angeordnet ist, um die Länge der Verbindungsdrähte zu begrenzen.

2. System (3) nach Anspruch 1, **dadurch gekennzeichnet, dass** das mobile elektronische Zahlungsterminal (1) erste Führungsmittel (15) umfasst, die dazu bestimmt sind, mit zweiten Führungsmitteln (25) der Andockstation (2) zusammenzuwirken, wobei sich die ersten Führungsmittel (15) unter der Vielzahl von Kontakten (14) erstrecken, um die Vielzahl von Kontakten (14) in mindestens zwei Gruppen von Kontakten (14A, 14B) zu trennen.

3. System (3) nach Anspruch 2, **dadurch gekennzeichnet, dass** die zweiten Führungsmittel (25) sich zwischen der Vielzahl von Aufnahmekontakten (24) erstrecken, um die Vielzahl von Kontakten (24) in mindestens zwei Gruppen von Kontakten (24A, 24B) zu trennen.

4. System (3) nach einem der Ansprüche 1 bis 3, **dadurch gekennzeichnet, dass** das mobile elektronische Zahlungsterminal (1) sechzehn Kontakte (14) umfasst.

5. System (3) nach einem der Ansprüche 1 bis 4, **dadurch gekennzeichnet, dass** die Station (2) sechzehn Aufnahmekontakte (24) umfasst.

## Claims

1. A system (3) comprising:
- a mobile electronic payment terminal (1) having a case (10) comprising a front face (101), a rear face (102) and edges (103, 104d, 104g) connecting said front (101) and rear (102) faces, said rear face (102) or an edge (103, 104d, 104g) having a plurality of contacts (14) intended to cooperate with a plurality of receiving contacts (24) on a docking and charging station (2), said contacts (14) of said mobile electronic payment terminal (1) being connected by means of a plurality of connecting wires to at least one electronic board of said mobile terminal (1), and comprising first locking means (13);
- the docking and charging station (2) comprising said plurality of receiving contacts (24), and second locking means (23) intended to cooperate with the first locking means (13) of the mobile electronic payment terminal (1);
said system (3) being **characterized in that** said first locking means (13) are provided on one of said edges (103, 104d, 104g) of said mobile electronic payment terminal (1), and said plurality of contacts (14) of the mobile electronic payment terminal (1) is disposed on a lower part of said rear face (102) of said mobile electronic payment terminal (1) near said electronic board, so as to limit the length of said connecting wires.

2. The system (3) according to claim 1, **characterized in that** the mobile electronic payment terminal (1) comprises first guide means (15) intended to cooperate with second guide means (25) of the docking station (2), said first guide means (15) extending among said plurality of contacts (14) so as to separate said plurality of contacts (14) into at least two contact groups (14A, 14B).

3. The system (3) according to claim 2, **characterized in that** said second guide means (25) extend among said plurality of receiving contacts (24) so as to separate said plurality of contacts (24) into at least two contact groups (24A, 24B).

4. The system (3) according to any one of claims 1 to 3, **characterized in that** the mobile electronic payment terminal (1) comprises sixteen contacts (14).

5. The system (3) according to any one of claims 1 to 4, **characterized in that** the station (2) comprises sixteen receiving contacts (24).
